# EUROPEAN PATENT SPECIFICATION

(11) **EP 2 521 155 B1**
(45) Date of publication and mention of the grant of the patent: **14.05.2014**
(21) Application number: 12158601.0
(22) Date of filing: 08.03.2012
(51) Int. Cl.: H01H 51/27, B60L 3/00, H01H 19/36

(54) **Contactor, in particular for disconnecting batteries in electrical wiring systems on board vehicles**
Schütz, insbesondere zum Abschalten von Batterien in elektrischen Verkabelungssystemen in Fahrzeugen
Contacteur, en particulier pour déconnecter des batteries dans des systèmes de câblage électrique à bord de véhicules

(30) Priority: 05.05.2011 IT TO20110396
(43) Date of publication of application: 07.11.2012
(73) Proprietor: MENBER'S S.p.A., 37045 Legnago (Verona) (IT)
(72) Inventor: Forsberg, Per Anders, 13100 Aix-en-Provence (FR); Crovetti, Claudio, 46030 Virgilio (Mantova) (IT); Tinto, Massimiliano, 37063 Isola della Scala (Verona) (IT)
(74) Representative: Meindl, Tassilo

(56) References cited:
- EP-A1- 0 863 531
- GB-A- 1 486 937

## Description

### Field of the invention

The present invention relates to a contactor, in particular of the type designed for use as battery disconnector in electrical wiring systems on board vehicles.

### Description of the prior art

The aforesaid contactors are normally used for connecting selectively a load, i.e., the electrical wiring system on board a vehicle, to a supply source, i.e., the battery of a vehicle. Contactors of this type generally have a casing bearing two or more fixed contacts and a mobile shaft axially bearing a mobile contact that co-operates with the fixed contacts. The shaft is typically coupled to an electromagnetic control device designed to displace the shaft from an operative first position, where the contacts are open, to an operative second position, where the contacts are closed.

For example, the document No. EP 0 863 531 describes a contactor comprising a stationary base bearing one or more fixed contacts, a mobile shaft axially bearing one or more mobile contacts that co-operate frontally with the fixed contacts, elastic means that tend to push the shaft towards an operative first position, and an electromagnetic control device designed to produce a force that recalls the shaft towards an operative second position against the action of the aforesaid elastic means.

For instance, the electromagnetic control device can comprise for this purpose an electric coil. In this way, one of the operative positions of the contactor (position of contacts open or of contacts closed) is an unstable configuration that is maintained, against the thrust of the elastic means, by keeping the electric coil energized, which produces an electromagnetic force of return on the shaft bearing the mobile contacts.

To prevent this problem, the document No. EP 0 863 531 describes a solution that also enables reduction of the electrical consumption of the coil. In particular, an anchorage device is operatively associated to the shaft and to the base, where the anchorage element has two stable retention positions corresponding to the operative first and second positions of the shaft. In this way, the anchorage device can be displaced from one stable retention position to another upon each activation of the coil.

For reasons of safety, frequently coupled to the contactor is a mechanical mechanism for manual switching of the electrical connection between the battery and the load. For example, a switch connected in series to the contactor can be used for this purpose.

Document GB 1486937 discloses a device according to the preamble of claim 1.

### Object and summary of the invention

The inventors have found that said mechanical interruption of the electrical connection between the battery and the load can cause various problems. For example, when the contactor is in the position of contacts closed and supply of the vehicle is activated, a high current can pass through the contactor and the switch. In these conditions, when the electrical connection is interrupted manually, electric arcs that can damage the contacts of the switch can be set up and/or interfere with operation of the electrical wiring system.

For example, in the presence of an inductive active load, said electric arcs can be set up when the user is performing the interruption slowly. Instead, in the presence of a capacitive load, the electric arcs can be set up on account of bouncing effects, for example, when the user is modifying the grip of the actuator that operates the manual interruption.

The object of the invention is to overcome the drawbacks outlined above.

According to the invention, said object is achieved thanks to a contactor having the characteristics recalled in the ensuing claims.

The claims form an integral part of the technical teaching provided herein in relation to the invention.

In various embodiments, the contactor comprises a stationary casing bearing at least two fixed contacts. Said contacts are electrically closed by means of at least one mobile contact co-operating with the fixed contacts.

For example, an electromagnetic control device coupled to the mobile contact can be used for selectively displacing the mobile contact into an operative first position, where the mobile contact and the fixed contacts are connected electrically, or into an operative second position, where the mobile contact and the fixed contacts are disconnected.

According to the invention, the contactor also comprises mechanical means designed to interrupt the electrical connection between the fixed contacts, and a sensor configured for detecting an actuation of the mechanical means before these effectively interrupt the electrical connection between the fixed contacts.

In various embodiments, a control device is used, such as for example a microcontroller, which controls the electromagnetic control device in such a way that the mobile contact is displaced into the open position, when the mechanical means are operated.

In various embodiments, the mechanical means are set within the casing and are operated via an actuator set outside the casing. For example, the actuator can be a handle that activates a descender for transmitting a movement of translation on the mobile contact.

### Brief description of the annexed drawings

The invention will now be described, purely by way of non-limiting example, with reference to the annexed drawings, wherein:
- Figure 1 is a schematic perspective view of a contactor according to the present invention;
- Figure 2 is an exploded perspective view of the contactor of Figure 1;
- Figures 3 to 6 show details of various components of the contactor of Figure 2; and
- Figures 7a and 7b are schematic perspective views illustrating the sequence of operation of the contactor according to the invention.

### Detailed description of embodiments

In the ensuing description, various specific details are illustrated aimed at providing an in-depth understanding of the embodiments. The embodiments may be obtained without one or more of the specific details, or with other methods, components, materials, etc. In other cases, known structures, materials, or operations are not illustrated or described in detail so that various aspects of the embodiments will not be obscured.

The reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in different points of this description do not necessarily refer to one and the same embodiment. Moreover, particular conformations, structures, or characteristics can be combined adequately in one or more embodiments.

The references used herein are provided merely for convenience and hence do not define the sphere of protection or the scope of the embodiments.

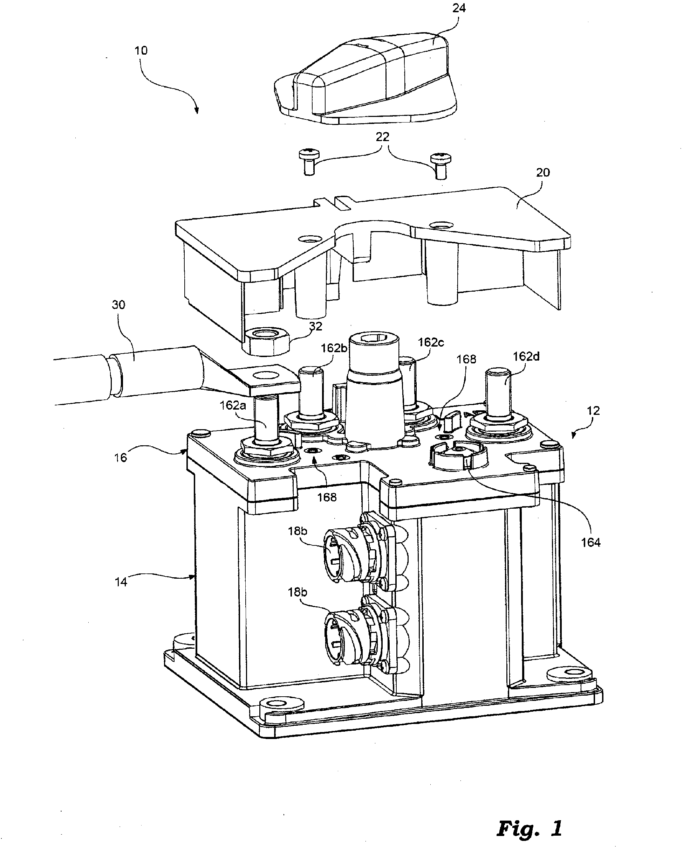

With reference to Figure 1, in one embodiment, the contactor 10 comprises a casing 12 comprising a box body 14 and a lid 16 that carries at least two fixed contacts 162, such as for example pins made of a conductive material.

For example, in the embodiment considered, the lid carries four fixed contacts 162a, 162b, 162c and 162d for connection to a battery and to a load.

For example, said connections can be obtained via conventional electric cables 30, which can also be fixed to the fixed contacts 162 by means of appropriate fixing means, such as for example locknuts 32, where each nut 32 comprises an internal thread that co-operates with a corresponding thread of the respective contact 162.

In particular, in the embodiment considered, the contacts 162a and 162d are connected to the negative terminal and to the positive terminal, respectively, of the battery of the vehicle, whereas the contacts 162b and 162c are connected to the negative terminal and to the positive terminal, respectively, of the load. In this case, to connect the load to the battery of the vehicle the contactor is configured for selectively closing the electrical connection between the contacts 162a and 162b and between the contacts 162c and 162d.

For example, in the embodiment considered, the contactor 10, preferably the lid 16, comprises a pushbutton 164 that can govern switching of the contactor 10. For example, said pushbutton could even close only, and hence never open, the contacts of the contactor 10.

Moreover, control of the contactor 10 can also be remote. For example, in the embodiment considered, the contactor comprises for this purpose at least one connector 18 for transmitting and/or receiving supply signals and/or control signals and/or command signals. For example, in the embodiment considered, the contactor 10 comprises two connectors 18a and 18b, where each connector comprises seven contacts, such as pins. For instance, in the embodiment considered, the contactor 10 can receive through the connectors 18a and 18b at least one remote-control signal or command signal that indicates the fact that the contactor must open or close the electrical connection between the contacts.

In particular, in the embodiment considered, the connectors 18 of the contactor 10 can comprise:
- lines for supplying positive and negative supplies at output (protected, for example, from short-circuits);
- lines for exchanging remote commands for activation and/or de-activation and/or inhibition of functions;
- lines for the transmission of data, such as, for example, a Controller Area Network (CAN) bus;
- input lines for reading external signals;
- output lines for sending commands to external devices;
- auxiliary contacts for synchronizing the alternator of the vehicle with opening/closing of the fixed contacts 162; and/or
- a connection to ground of the device (where not available on the power pins).

In the embodiment considered, the contactor 10 also comprises an optional rigid protection 20, such as for example a protection plate made of a plastic material, which has a shape configured for protecting the fixed contacts 162 when the protection 20 is fixed to the casing 12. For example, in the embodiment considered, said protection 20 is fixed to the lid 16 of the casing 12 via appropriate fixing means in such a way as to cover the fixed contacts 162. For example, in the embodiment considered, said fixing means are screws 22 that co-operate with corresponding threaded holes 168 in the lid 16. Preferably, the screws 22 are screwed into threaded inserts secured by expansion into the lid 16, because a possible thread made directly in the plastic of the lid could in the long run lose its thread.

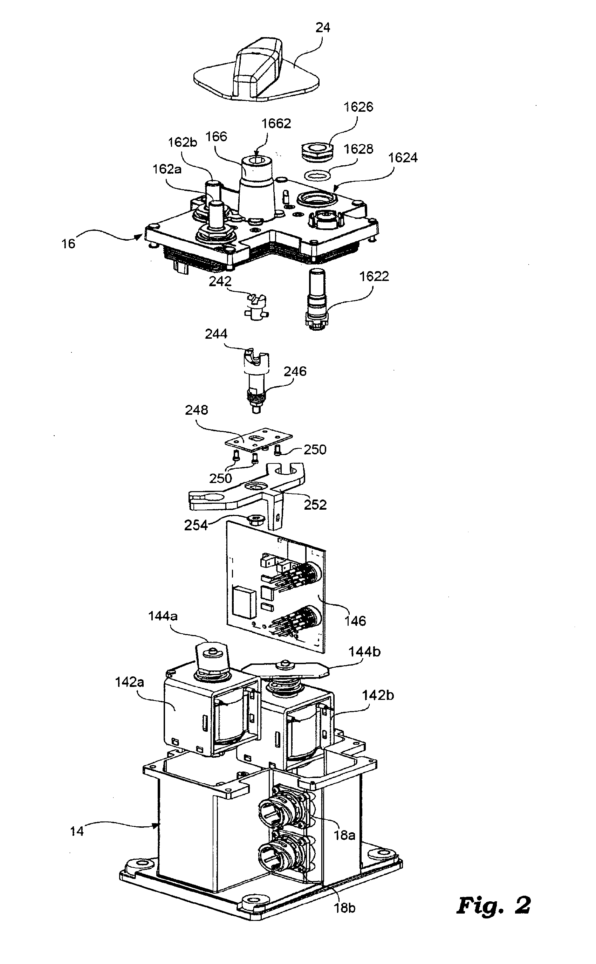

Figure 2 shows a possible embodiment of the internal structure of the contactor of Figure 1.

As mentioned previously, the lid 16 of the contactor 10 comprises a plurality of fixed contacts 162. For example, in the case where the lid 16 is made of a plastic material, it can be injection moulded directly on the fixed contacts 162.

Instead, in the embodiment illustrated in Figures 1 and 2, said fixed contacts 162 are obtained as externally threaded pins 1622, which comprise on the under side a widened portion. Said power pins 1622 are inserted in corresponding openings in the lid 16, such as for example through holes 1624, and fixed on the upper side of the lid 16 by means of locknuts 1626. Preferably, a seal is provided for each fixed contact 162, such as for example an O-ring 1628, which is set between the surface of the lid 16 and the respective nut 1626, in such a way as to render liquid-tight the area of passage of the respective pin 1622.

As mentioned previously, the contactor 10 is configured for selectively closing, for example in response to a signal received from the pushbutton 164, the electrical connection between the fixed contacts 162, i.e., between the contacts 162a and 162b and between the contacts 162c and 162d.

In one embodiment, the contactor 10 comprises for this purpose at least one electromagnetic control device 142 and at least one mobile contact 144, which co-operates with the fixed contacts 162. For example, when the electromagnetic control device 142 is actuated, the mobile contact or contacts 144 are pushed from beneath against the fixed contacts 162 and close the electrical connection between the fixed contacts 162.

In particular, in the embodiment considered, two electromagnetic control devices 142a and 142b, and respectively two mobile contacts 144a and 144b, are used, where each mobile contact 144 is coupled to the shaft of the respective electromagnetic control device 142.

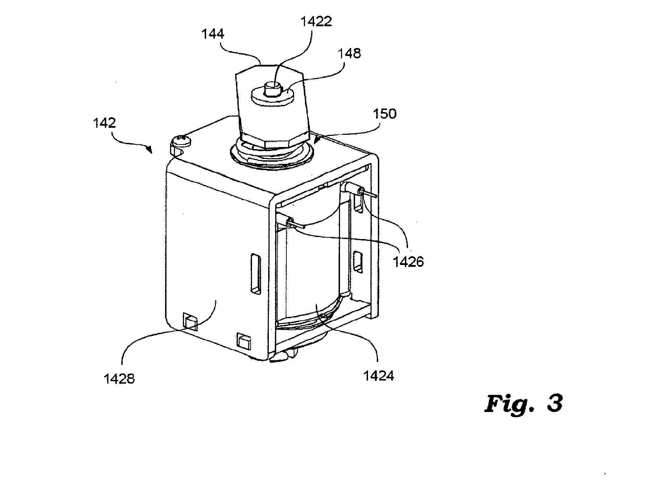

Figure 3 illustrates a possible embodiment of an electromagnetic control device 142.

In the embodiment considered, the electromagnetic control device 142 comprises a stationary casing 1428 and a shaft 1422 axially mobile with respect to the casing 1428; i.e., the shaft 1422 can translate in the direction of its own longitudinal axis, and the movement of the shaft can be controlled by means of the electromagnetic device 142.

For example, in the embodiment considered, the shaft 1422 can be actuated via a coil 1424 set within the casing 1428. The coil 1424 can, for example, be a solenoid comprising two electrical contacts 1426.

In one embodiment, the electromagnetic control device 142 is of the "electrical latching" or "monostable" type. In this case, the electromagnetic control device 142 comprises inside it an elastic element, such as for example a spring, which tends to push (or pull) the shaft towards an operative first position. Instead, when a current is applied to the coil 1424 of the electromagnetic control device 142, a force is generated that pushes the shaft 1422 in an operative second position that is maintained against the tensile stress of the elastic element. This means that one of the two positions is stable, i.e., is a resting position (without supply), whereas the other (with the device supplied) is a position forced as a result of the electromagnetic field.

Instead, in the embodiment considered here, electromagnetic control devices 142 of the "mechanical latching" or "bistable" type are used. Said devices are characterized by two stable positions, i.e., a retention position in which the mobile contact 144 is in the open position and a retention position in which the mobile contact 144 is in the closed position. In particular, said positions are kept stable in a mechanical way thanks to anchorage means, such as for example a cam. Consequently, these electromagnetic control devices consume current only for switching (from on to off, and vice versa) but, once they have reached one or the other position, do not require supply.

In the embodiment considered, the mobile contact 144 is not rigidly fixed to the shaft 1422, but the electromagnetic control device 142 comprises an elastic element 150, such as for example a spring, which tends to push (or pull) the mobile contact 142 upwards, i.e., in the direction of the fixed contacts 162. For example, in the embodiment considered, the shaft 1422 comprises on its upper side a stop ring 148, and the spring 150 tends to push the mobile contact 144 against said stop ring 148. Consequently, the spring 150 is always in a state of compression, even when the mobile contact 144 is in the closed position. In said position, the mobile contact 144 will encounter the obstacle of the fixed contacts 1622, and the spring 150 will guarantee a sufficient pressure of the former on the latter so as to ensure adequate closing of the contact and hence passage of current.

In one embodiment, the contactor 10 also comprises an electrical circuit, mounted, for example, on a printed circuit 146.

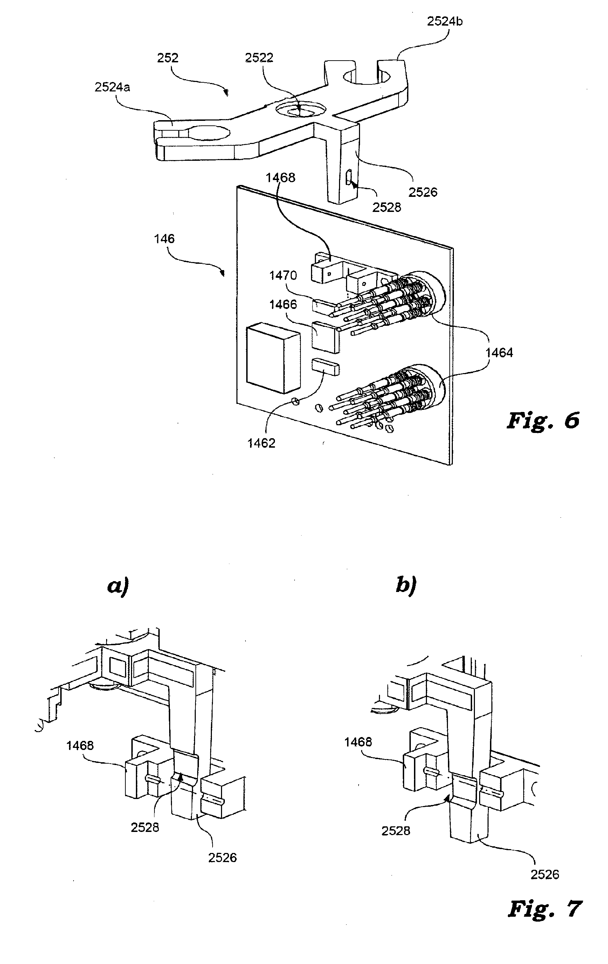

For example, Figure 6 shows an embodiment of such a printed circuit 146.

In the embodiment considered, the circuit 146 comprises a driver 1462 for driving the electromagnetic control devices 142a and 142b, contacts 1464 for the connectors 18a and 18b, and a processing circuit, such as for example a microcontroller 1466 configured for controlling operation of the driver 1462 and communication through the connectors 18a and 18b.

According to the invention, the contactor 10 also comprises mechanical means for manual switching of the electrical connection between the fixed contacts 162 of the contactor 10.

In the embodiment considered, the contactor 10 comprises an actuator that can be operated by a user, such as for example a handle 24, where the actuator 24 operates a mechanism within the contactor 10 for interrupting the electrical connection between the contacts mechanically.

Figure 2 shows a possible embodiment of such a mechanical mechanism configured for interrupting the electrical connection between the contacts 162 in response to operation of the actuator 24.

In the embodiment considered, said mechanism intervenes directly on the connection between the fixed contacts 162 and the mobile contacts 144. For example, in the embodiment considered, the mechanism is configured for pushing the mobile contacts 144 downwards, or in general away from the fixed contacts 162, when a user turns the handle 24 from an operative first position to an operative second position.

In the embodiment considered, the mechanism comprises for this purpose mechanical means that convert the rotational movement of the handle 24 into a movement of translation along the axis of rotation of the handle 24, i.e., in a direction that is parallel to the axes 1422 of the electromagnetic control devices 142.

For example, in the embodiment considered, the mechanical conversion means comprise an actuator 242, a shaft with cam 244, and elastic means, such as for example a spring 246, configured for pressing the shaft with cam 244 against the actuator 242. The shaft 244 is thus axially mobile and is pushed by the spring 246 against the actuator 242.

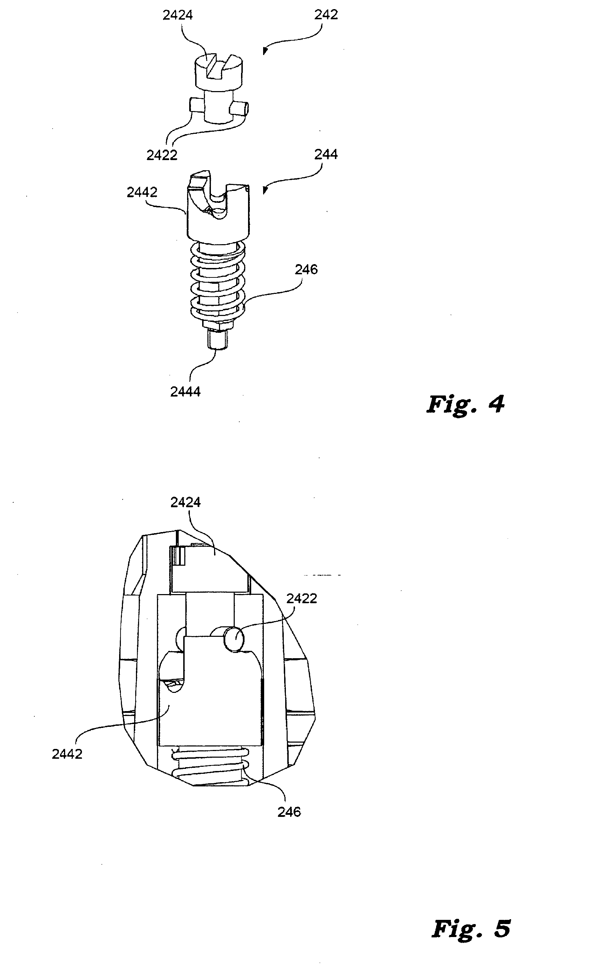

With reference to Figures 5 and 6, the shaft 244 comprises in its upper part a cam 2442 that co-operates with the actuator 242 and in its lower part a portion of smaller diameter, which is used to push the mobile contacts 144 away from the fixed contacts 162.

In the embodiment considered, the actuator 242 comprises, on its upper side, a cut 2424, which co-operates with a corresponding portion of the handle 24 in such a way as to receive the motion of rotation of the handle 24.

In the embodiment considered, the actuator 242 comprises on its under side at least one projection 2422, which co-operates with the cam 2442 of the shaft 244.

Consequently, when the handle 24 is turned, the actuator 242 is also turned, and the projections 2422 co-operate with the cam 2442 to push the shaft 244 axially downwards against the force of the spring 246.

In the embodiment considered, the entire mechanism, i.e., the actuator 242, the shaft with cam 244, and the spring 246, is inserted into a substantially cylindrical hollow portion 166 of the lid 16 and then closed from beneath via a plate 248 comprising an opening in such a way that only the portion 2444 of the shaft 244 projects from the under side of the plate 248 and the plate provides a rest for the spring 246. For example, in the embodiment considered, the plate 248 is fixed to the lid 16 via screws 250.

In the embodiment considered, the cylindrical portion 166 of the lid 16 comprises on its upper side an opening 1662, into which a portion of the handle 24 for operating the actuator 242 can be inserted.

In one embodiment, further means are provided for transmitting the axial movement of the shaft 242 to the mobile contacts 144.

For example, in the embodiment considered, a lamella 252 is used, fixed to the portion 2444 of the shaft 244. For example, the lamella 252 can comprise an opening 2522, in which the portion 2444 of the shaft 244 is inserted, and then the lamella 252 is clamped to the portion 2444 by means of appropriate fixing means, such as for example a nut 254, which co-operates with a corresponding external thread of the portion 2444. In this case, it may also be envisaged that the portion 2444 of the shaft 244 has a cross section configured so as to guarantee that the coupling between the lamella 254 and the shaft 244 is blocked with respect to movements of rotation.

With reference to Figure 6, in the embodiment considered, the lamella 252 comprises for each mobile contact 144 a shaped portion 2524a and 2524b, which co-operate, with their end portions, with the mobile contacts 144a and 144b, respectively.

As mentioned previously, each shaft 244 of the electromagnetic devices 142 can translate in the direction of its own longitudinal axis, and the movement of the shaft 1422 can be controlled via actuation of the respective electromagnetic device 142.

In one embodiment, each shaped portion 2524 is configured for pushing the shaft 1422 of the respective mobile contact 144 downwards.

However, as mentioned previously, the electromagnetic control devices 142 can also comprise anchorage means that define two stable retention positions. In this case, the shaft 1422 cannot be pushed manually downwards, because it is always in a stable position. To prevent this problem, each shaped portion 2524 can have a slot or opening that allows passage of the shaft 1422 of the respective electromagnetic control device 142 in such a way that the movement of the shaft 244 is transmitted directly onto the mobile contacts 144, which are then pushed downwards against the force of the springs 150.

The inventors have found that a manual interruption of the electrical connection between the contacts can cause various problems. For example, when the contacts are closed and supply of the vehicle is activated, a high current can pass through the contacts. In these conditions, when the electrical connection is interrupted manually, electric arcs can be set up that can damage the contacts and/or the electrical wiring system on board the vehicle.

In one embodiment, to prevent this problem, a sensor 1468 is provided that detects an activation of the manual interruption before this interrupts the electrical connection mechanically.

For example, in one embodiment, the mechanism of manual interruption comprises an operative first position, where the contactor is ready, i.e., where the electrical connection between the fixed contacts 162 can be closed by means of the electromagnetic control devices 142, and an operative second position, where the mechanism interrupts the electrical connection between the fixed contacts 162. In this case, the sensor detects the fact that the actuator or another component of the mechanism has been displaced into a position intermediate between the operative first and second positions.

In one embodiment, the signal received by the sensor 1468 is used by a control unit, for example the microcontroller 1466, for controlling the electromagnetic device or devices 142 in such a way that the shaft 1422 of the respective electromagnetic control device is displaced into the position in which the respective mobile contact 144 is open, i.e., the fixed contacts 162 are disconnected via the electromagnetic control devices 142, and the manual switching mechanism ensures only the mechanical interruption of the electrical connection.

Preferably, the microcontroller 1466 is also configured, after driving the electromagnetic control devices 142 in such a way that the respective mobile contact 144 is pushed into the open position, for activating the electromagnetic control devices 142 in such a way as to prevent any possible interference with the manual switching mechanism. For example, the microcontroller 1466 can de-activate or inhibit activation of the electromagnetic control device 142 once the mobile contact has reached the open position. For example, said de-activation of the electromagnetic control devices 142 can be made for a predetermined time interval or for the entire duration of activation of manual interruption, possibly being based also on a filtered signal to prevent bouncing effects.

Consequently, the manual switching mechanism, in particular the lamella 252, has two functions:
- in the case where the voltage is sufficient and the sensor 1468 is activated, the microcontroller 1466 will cause opening of the electromagnetic control devices 142 and there will not be any mechanical stress; or
- in the case where the voltage is insufficient (or in the case of interruption of the circuit of the sensor, for example on account of a failure of components of the circuit), the manual switching mechanism guarantees opening of the contacts exerted directly against the spring 150.

For example, in the embodiment considered, the sensor 1468 is an optical sensor, such as for example a sensor comprising an infrared transmitter and an infrared receiver. However, also other types of sensors can be used, such as for example magnetic or contact sensors.

In the embodiment considered, the sensor 1468 is electrically coupled to the driver 1462 of the electromagnetic control devices 142. For example, the sensor 1468 can be connected to the microcontroller 1466 via an interface circuit of the sensor 1470, and the microcontroller 1466 can be configured for controlling operation of the electromagnetic control devices 142 in response to the signal detected by the sensor 1468.

In one embodiment, the sensor 1468, and possibly also the interface circuit 1470, are mounted directly on one and the same printed circuit 146.

In the embodiment considered, the microcontroller 1466 hence receives at input the signal detected by the sensor 1468 and supplies at output a signal that instructs the driver 1462 in such a way that the shaft 1422 of each electromagnetic control device 142 is displaced from the closed position to the open position, i.e., the mobile contacts 144a and 144b are disconnected from the fixed contacts 162a to 162d.

As described previously, this switching can include a brief actuation of the coils 1424 for displacing the shaft 1422 from one stable retention position into the other stable retention position.

In general, the sensor 1468 is configured for detecting activation of manual interruption before this interrupts the electrical connection mechanically. For example, in the embodiment considered, the sensor 1468 is pre-arranged for detecting a movement of translation of the shaft 244 or of the lamella 252.

In the embodiment considered, the lamella 252 comprises for this purpose a projection or a prolonged portion 2526 that co-operates with the sensor 1468.

In particular, when the handle is in an operative first position, the prolonged portion 2526 does not interfere with the radiation generated by the transmitter of the sensor 1468; i.e., the receiver of the optical sensor 1468 receives the radiation generated by the transmitter of the sensor 1468. Instead, when the handle is in an operative second position, a part of the prolonged portion 2526 is inserted between the transmitter and the receiver of the optical sensor 1468; i.e., the receiver of the optical sensor 1468 receives a lower amount of radiation.

Figures 7a and 7b illustrate the sequence of operation of the sensor 1468.

In the embodiment considered, the prolonged portion 2526 of the lamella 2526 comprises an opening 2528 set in such a way that the receiver of the optical sensor 1468 receives the radiation generated by the transmitter of the sensor 1468 when the handle is activated.

For example, when the handle is in the position in which the contactor 10 is ready for being activated (see Figure 7a), the terminal part of the prolonged portion 2526 is inserted between the transmitter and the receiver of the optical sensor 1468; i.e., the receiver does not receive direct radiation from the transmitter of the optical sensor 1468. Instead, when the handle 24 is turned about its axis (see Figure 7b), the descender, i.e., the actuator 242 and the shaft with cam 244, create a movement of translation along the axis of the handle 24, which displaces the lamella 252 downwards. Consequently, also the prolonged portion is displaced downwards, and the opening 2528 is displaced in front of the receiver of the sensor 1468; i.e., the receiver starts to receive the radiation generated by the transmitter of the sensor 1468.

In the embodiment considered, the microcontroller detects this event and generates the respective control signals for opening the mobile contacts 144a and 144b by means of the electromagnetic control devices 142a and 142b.

Consequently, the electrical connection is interrupted before the shaped portions 2524 come into contact with the mobile contacts 144. Completion of rotation of the handle 24 hence serves only to bring the handle into a stable position, where the shaped portions 2524 keep the mobile contacts 144 in the open position.

In any case, even a failure of the sensor 1468 does not create any danger for the user because in this case the mechanical mechanism of interruption intervenes effectively as described previously and displaces the mobile contacts 144 downwards, i.e., opens the connection between the mobile contacts 144 and the fixed contacts 162.

In general, the sensor described previously can be applied to any manual switch, even if it is a switch separate from the contactor 10. However, the switching mechanism described herein presents the advantage that the switch for manual disconnection and the electromagnetic control device use the same contacts; i.e., additional contacts are not necessary to provide a switch dedicated exclusively to manual interruption.

## Claims

1. A contactor comprising:
- a stationary casing (12, 14, 16) bearing at least two fixed contacts (162);
- at least one mobile contact (144) co-operating with said at least two fixed contacts (162); and
- at least one electromagnetic control device (142), which is coupled to a respective mobile contact (144) and wherein said electromagnetic control device (142) is configured for pushing said mobile contact (162) selectively into an operative first position or into an operative second position, where
a) when said mobile contact (144) is in said operative first position, said mobile contact (144) and said at least two fixed contacts (162) are electrically connected; and
b) when said mobile contact (144) is in said operative second position, said mobile contact (144) and said at least two fixed contacts (162) are disconnected,
said contactor being **characterized in that** it comprises:
- mechanical means (242-254) adapted to interrupt electrical connection between said at least two fixed contacts (162); **characterised by**
- a sensor (1468), configured for detecting actuation of said mechanical means (24, 242-254) before these interrupt the electrical connection between said at least two fixed contacts (162); and
- a control device (1462, 1466, 1470) configured for driving said at least one electromagnetic control device (142) in such a way that the respective mobile contact (144) is pushed into said operative second position when said sensor (1468) indicates that said mechanical means (24, 242-254) have been operated.

2. The contactor according to Claim 1, wherein said at least one electromagnetic control device (142) comprises a shaft (1422) mobile with respect to the casing (12, 14, 16) in the direction of its own longitudinal axis, and wherein the respective mobile contact (144) is coupled to said shaft (1422).

3. The contactor according to Claim 2, wherein said at least one electromagnetic control device (142) is a bistable electromagnetic control device in such a way that said operative first and second positions correspond to two stable retention positions.

4. The contactor according to Claim 2 or Claim 3, wherein said at least one electromagnetic control device (142) comprises:
- blocking means (148), fixed to said shaft (1422); and
- elastic means (150), configured for:
a) pushing said mobile contact against said at least two fixed contacts (162) when said mobile contact (144) is in said operative first position; and
b) pushing said mobile contact (144) against said blocking means (148) when said mobile contact (144) is in said operative second position.

5. The contactor according to any one of the preceding claims, wherein said mechanical means (242-254) are set within said casing and wherein said mechanical means (242-254) are operated via an actuator (24) set on the outside of the casing and accessible to a user.

6. The contactor according to Claim 5, wherein said actuator (24) is a handle adapted to be turned about its own axis from a first position to a second position, and wherein said mechanical means (242-254) comprise motion-conversion means (242, 244, 246) for converting the movement of rotation of said handle (24) into a movement of translation along the axis of said handle (24).

7. The contactor according to Claim 6, wherein said motion-conversion means comprises a shaft with cam (244), an actuator (242) comprising at least one projection (2422) that co-operates with the cam of said shaft with cam (244), and an elastic means (246) that presses said shaft with cam (244) against said actuator (242).

8. The contactor according to Claim 6 or Claim 7, wherein said mechanical means (242-254) comprise means (252) for transmitting the movement of translation of said motion-conversion means (242, 244, 246) to said at least one mobile contact (144).

9. The contactor according to any one of Claims 6 to 8, wherein said sensor is configured for detecting a movement of translation of said mechanical means (242-254).

10. The contactor according to any one of the preceding claims, wherein said sensor is an optical, magnetic, or contact sensor.

11. The contactor according to any one of the preceding claims, wherein said control device (1462, 1466, 1470) is configured, after driving said at least one electromagnetic control device (142) in such a way that the respective mobile contact (144) is pushed into said operative second position, for de-activating said at least one electromagnetic control device (142) to prevent interference with interruption of the electrical connection between said at least two fixed contacts via said mechanical means (242-254).

## Patentansprüche

1. Ein Schütz bestehend aus:
- einem stationären Gehäuse (12, 14, 16), das mindestens zwei feststehende Kontakte (162) trägt;
- mindestens einem beweglichen Kontakt (144), der mit den mindestens zwei feststehenden Kontakten (162) zusammenwirkt; und
- mindestens einer elektromagnetischen Steuereinrichtung (142), die an einen entsprechenden beweglichen Kontakt (144) gekoppelt ist und wobei die elektromagnetische Steuereinrichtung (142) konfiguriert ist, den beweglichen Kontakt (162) selektiv in eine erste Betriebsposition oder in eine zweite Betriebsposition zu schieben, wobei
a) wenn sich der bewegliche Kontakt (144) in der ersten Betriebsposition befindet, der bewegliche Kontakt (144) und die mindestens zwei feststehenden Kontakte (162) elektrisch verbunden sind; und
b)wenn sich der bewegliche Kontakt (144) in der zweiten Betriebsposition befindet, der bewegliche Kontakt (144) und die mindestens zwei feststehenden Kontakte (162) elektrisch getrennt sind,
der Schütz ist **dadurch gekennzeichnet, dass** er einschließt:
- mechanische Mittel (242-254), die geeignet sind die elektrische Verbindung zwischen den mindestens zwei feststehenden Kontakten (162) zu unterbrechen; **gekennzeichnet durch**
- einen Sensor (1468), konfiguriert zum detektieren einer Betätigung der mechanischen Mittel (24, 242-254), bevor diese die elektrische Verbindung zwischen den mindestens zwei feststehenden Kontakten (162) unterbrechen; und
- eine Steuereinrichtung (1462, 1466, 1470) konfiguriert zum Antreiben der mindestens einen elektromagnetischen Steuereinrichtung (142) in einer Weise, dass der entsprechende bewegliche Kontakt (144) in die zweite Betriebsposition geschoben wird, wenn der Sensor (1468) anzeigt, dass die mechanischen Mittel (24, 242-254) betrieben worden sind.

2. Der Schütz nach Anspruch 1, wobei die mindestens eine elektromagnetische Steuereinrichtung (142) eine in Bezug auf das Gehäuse (12, 14, 16) in Richtung ihrer eigenen Längsachse bewegliche Welle (1422) aufweist, und wobei der entsprechende bewegliche Kontakt (144) mit der Welle (1422) gekoppelt ist.

3. Der Schütz nach Anspruch 2, wobei die mindestens eine elektromagnetische Steuereinrichtung (142) eine bistabile elektromagnetische Steuereinrichtung ist, in einer Weise, dass die ersten und zweiten Betriebspositionen zwei stabilen Haltepositionen entsprechen.

4. Der Schütz nach Anspruch 2 oder Anspruch 3, wobei die mindestens eine elektromagnetische Steuereinrichtung (142) aufweist:
- Sperrmittel (148), befestigt an der Welle (1422); und
- Elastische Mittel (150), konfiguriert um:
a) den beweglichen Kontakt gegen die mindestens zwei feststehenden Kontakte (162) zu schieben, wenn sich der bewegliche Kontakt (144) in der ersten Betriebsposition befindet; und
b)den beweglichen Kontakt (144) gegen die Sperrmittel (148) zu schieben, wenn sich der bewegliche Kontakt (144) in der zweiten Betriebsposition befindet.

5. Der Schütz nach einem der vorstehenden Ansprüche, wobei die mechanischen Mittel (242-254) innerhalb des Gehäuses eingesetzt sind und wobei die mechanischen Mittel (242-254) durch einen Aktuator (24) bedient werden, der auf der Außenseite des Gehäuses angeordnet ist und dem Anwender zugänglich ist.

6. Der Schütz nach Anspruch 5, wobei der Aktuator (24) ein Griff ist, der geeignet ist um seine eigene Achse, von einer ersten Position zu einer zweiten Position, gedreht zu werden und wobei die mechanischen Mittel (242-254) Bewegungsumwandlungsmittel (242, 244, 246) aufweisen, um die Rotationsbewegung des Griffs (24) in eine Translationsbewegung entlang der Achse des Griffs (24) umzuwandeln.

7. Der Schütz nach Anspruch 6, wobei die Bewegungsumwandlungsmittel eine Welle mit Nocken (244), einen Aktuator (242), der mindestens einen Vorsprung (2422) aufweist, der mit der Nocke der Welle mit Nocken (244) kooperiert, und ein elastisches Mittel (246), das die Welle mit Nocken (244) gegen den Aktuator (242) presst, aufweist.

8. Der Schütz nach Anspruch 6 oder Anspruch 7, wobei die mechanischen Mittel (242-254) Mittel (252) zur Transmission der Translationsbewegung der Bewegungsumwandlungsmittel (242, 244, 246) zu dem mindestens einem beweglichen Kontakt (144) aufweisen.

9. Der Schütz nach einem der Ansprüche 6 bis 8, wobei der Sensor konfiguriert ist, um eine Translationsbewegung der mechanischen Mittel (242-254) zu detektieren.

10. Der Schütz nach einem der vorstehenden Ansprüche, wobei der Sensor ein optischer, magnetischer oder Berührungssensor ist.

11. Der Schütz nach einem der vorstehenden Ansprüche, wobei die Steuereinrichtung (1462, 1466, 1470) konfiguriert ist, nach dem Antreiben der mindestens einen elektromagnetischen Steuereinrichtung (142) in einer Weise, dass der entsprechende bewegliche Kontakt (144) in die zweite Betriebsposition geschoben wurde, um die mindestens eine elektromagnetische Steuereinrichtung (142) zu deaktivieren, um Beeinträchtigungen mit der Unterbrechung der elektrischen Verbindung zwischen den mindestens zwei feststehenden Kontakten durch die mechanischen Mittel (242-254) zu verhindern.

## Revendications

1. Contacteur comprenant :
un boîtier fixe (12, 14, 16) supportant au moins deux contacts fixes (162);
au moins un contact mobile (144) coopérant avec lesdits au moins deux contacts fixes (162) ; et
au moins un dispositif de commande électromagnétique (142), qui est couplé à un contact mobile respectif (144) et dans lequel ledit dispositif de commande électromagnétique (142) est configuré pour pousser ledit contact mobile (162) de manière sélective vers une première position opérationnelle ou vers une deuxième position opérationnelle, où
a) lorsque ledit contact mobile (144) est dans ladite première position opérationnelle, ledit contact mobile (144) et lesdits au moins deux contacts fixes (162) sont connectés électriquement ; et
b) lorsque ledit contact mobile (144) est dans ladite deuxième position opérationnelle, ledit contact mobile (144) et lesdits au moins deux contacts fixes (162) sont déconnectés,
ledit contacteur étant **caractérisé en ce qu'**il comprend :
des moyens mécaniques (242-254) adaptés pour interrompre une connexion électrique entre lesdits au moins deux contacts fixes (162) ; **caractérisé par**
un capteur (1468), configuré pour détecter l'actionnement desdits moyens mécaniques (24, 242-254) avant qu'ils n'interrompent la connexion électrique entre lesdits au moins deux contacts fixes (162) ; et
un dispositif de commande (1462, 1466, 1470) configuré pour piloter ledit au moins un dispositif de commande électromagnétique (142) de sorte que le contact mobile respectif (144) soit poussé vers ladite deuxième position opérationnelle lorsque ledit capteur (1468) indique que lesdits moyens mécaniques (24, 242-254) ont été actionnés.

2. Contacteur selon la revendication 1, dans lequel ledit au moins un dispositif de commande électromagnétique (142) comprend un arbre (1422) mobile par rapport au boîtier (12, 14, 16) dans la direction de son propre axe longitudinal, et dans lequel le contact mobile respectif (144) est couplé audit arbre (1422).

3. Contacteur selon la revendication 2, dans lequel ledit au moins un dispositif de commande électromagnétique (142) est un dispositif de commande électromagnétique bistable de sorte que lesdites première et deuxième positions opérationnelles correspondent à deux positions de rétention stables.

4. Contacteur selon la revendication 2 ou 3, dans lequel ledit au moins un dispositif de commande électromagnétique (142) comprend :
des moyens de blocage (148), fixés audit arbre (1422) ; et
des moyens élastique (150), configurés pour :
a) pousser ledit contact mobile contre lesdits au moins deux contacts fixes (162) lorsque ledit contact mobile (144) est dans ladite première position opérationnelle ; et
b) pousser ledit contact mobile (144) contre lesdits moyens de blocage (148) lorsque ledit contact mobile (144) est dans ladite deuxième position opérationnelle.

5. Contacteur selon l'une quelconque des revendications précédentes, dans lequel lesdits moyens mécaniques (242-254) sont définis à l'intérieur dudit boîtier et dans lequel lesdits moyens mécaniques (242-254) sont actionnés par l'intermédiaire d'un actionneur (24) défini sur la partie extérieure du boîtier et accessible à un utilisateur.

6. Contacteur selon la revendication 5, dans lequel ledit actionneur (24) est une poignée adaptée pour être tournée autour de son propre axe à partir d'une première position vers une deuxième position, et dans lequel lesdits moyens mécaniques (242-254) comprennent un moyen de conversion de mouvement (242, 244, 246) destiné à convertir le mouvement de rotation de ladite poignée (24) en un mouvement de translation le long de l'axe de ladite poignée (24).

7. Contacteur selon la revendication 6, dans lequel ledit moyen de conversion de mouvement comprend un arbre à came (244), un actionneur (242) comprenant au moins une saillie (2422) qui coopère avec la came dudit arbre à came (244), et un moyen élastique (246) qui presse ledit arbre à came (244) contre ledit actionneur (242).

8. Contacteur selon la revendication 6 ou 7, dans lequel lesdits moyens mécaniques (242-254) comprennent un moyen (252) destiné à transmettre le mouvement de translation dudit moyen de conversion de mouvement (242, 244, 246) audit au moins un contact mobile (144).

9. Contacteur selon l'une quelconque des revendications 6 à 8, dans lequel ledit capteur est configuré pour détecter un mouvement de translation desdits moyens mécaniques (242-254).

10. Contacteur selon l'une quelconque des revendications précédentes, dans lequel ledit capteur est un capteur optique, magnétique ou un capteur de contact.

11. Contacteur selon l'une quelconque des revendications précédentes, dans lequel ledit dispositif de commande (1462, 1466, 1470) est configuré, après pilotage dudit au moins un dispositif de commande électromagnétique (142) de sorte que le contact mobile respectif (144) soit poussé vers ladite deuxième position opérationnelle, pour désactiver ledit au moins un dispositif de commande électromagnétique (142) afin d'empêcher une interférence avec l'interruption de la connexion électrique entre lesdits au moins deux contacts fixes par l'intermédiaire desdits moyens mécaniques (242-254).
